# EUROPÄISCHE PATENTSCHRIFT

(11) **EP 0 656 253 B1**
(45) Veröffentlichungstag und Bekanntmachung des Hinweises auf die Patenterteilung: **17.05.2000**
(21) Anmeldenummer: 94810631.5
(22) Anmeldetag: 02.11.1994
(51) Int. Cl.: B32B 3/30, E04C 2/32

(54) **Formsteife Verbundplatte**
Rigid composite panel
Panneau composite rigide

(30) Priorität: 25.11.1993 CH 351793
(43) Veröffentlichungstag der Anmeldung: 07.06.1995
(73) Patentinhaber: Alusuisse Technology & Management AG, 8212 Neuhausen am Rheinfall (CH)
(72) Erfinder: Zingg, Anton, CH-8049 Zürich (CH); Kölliker, Willy, CH-4614 Hägendorf (CH); Deubelbeiss, Urs, CH-5200 Windisch (CH); Lehmann, Kurt, CH-5620 Bremgarten (CH)

(56) Entgegenhaltungen:
- DE-U- 8 910 056
- FR-A- 2 330 535
- FR-A- 2 441 692
- US-A- 3 622 430
- US-A- 3 868 297
- US-A- 4 462 194

## Beschreibung

Vorliegende Erfindung betrifft eine formsteife Verbundplatte nach dem Oberbegriff des Anspruchs 1.

Es sind Verbundplatten, beispielsweise für Fassaden oder Fassadenverkleidungen an Hochbauten, als Innenwände, für Trennwände oder als Stellwände zum Innenausbau von Gebäuden und Räumen, bekannt. Verbundplatten dieser Art enthalten beispielsweise einen Kern und, anliegend an den Kern, Aussenschichten. Die Aussenschichten können beispielsweise Metallschichten oder Kunststoffschichten sein. Auf diesen Metall- oder Kunststoffschichten können gegebenenfalls weitere Schichten, beispielsweise zur Erzeugung einer dekorativen Oberfläche, oder für andere Zwecke, angebracht sein. Es sind auch Verbundplatten bekannt, die unsymmetrisch aufgebaut sind, d.h. die Verbundplatten enthalten eine erste Schicht, z.B. eine Metall- oder Kunststoffschicht, und auf der einen Seite eine zweite Schicht, beispielsweise eine dekorative oder funktionelle Schicht, und auf der anderen Seite eine dritte Schicht mit einer anderen Funktion als die beiden anderen Schichten. Bekannt sind beispielsweise aus der Praxis Verbundplatten enthaltend einen Kern aus geschäumtem Kunststoffmaterial. Auf diesem geschäumten Material werden ein- oder beidseitig mehr oder minder dicke tragende Schichten, beispielsweise in Form von Metallblechen, angebracht. Wird das schaumförmige Isolationsmaterial aus Kunststoff beispielsweise mit einer Metallschicht abgedeckt und auf diese Metallschicht mittels eines Klebstoffes eine weitere Kunststoffschicht aufgebracht, so wurde festgestellt, dass durch noch im Klebstoff enthaltene Restlösungsmittel oder durch andere verdampfende Stoffe aus dem Klebstoff oder durch Zersetzungsprodukte aus dem Klebstoff die sich entwickelnden Gase nicht verflüchtigen können und die Kunststoffschicht dadurch zum Ablösen von der Metallschicht neigt. Dadurch bietet sich die sichtbare Aussenfläche der Kunststoffschicht durch Blasenbildung oder Faltenwurf ästhetisch unbefriedigend dar. Zudem ist eine Delaminierung von Verbundplatten, auch nur im Ansatz, unerwünscht.

Aufgabe vorliegender Erfindung ist es, diese Nachteile an Verbundplatten zu beheben und Verbundplatten zur Verfügung zu stellen, die über lange Zeiträume nicht delaminieren oder durch Einflüsse einzelner Komponenten sich nicht nachteilig verändern.

Erfindungsgemäss wird dies dadurch erreicht, dass die Deckschicht aus gas- und dampfundurchlässigem Material besteht, dass die Trägerschicht eine Dicke von mindestens 0,3 mm hat und eine Vielzahl von Ausnehmungen aufweist, welche mehr als 0,5 % der Oberfläche betreffen, dass die gas- und dampfdurchlässige dritte Schicht aus einem Formkörper aus gegenseitig verklebten, zelligen Körnern aus geblähtem Polystyrol ist, wobei die zelligen Körner durch einen gehärteten Klebstoff miteinander verbunden sind.

Erfindungsgemässe Verbundplatten können auf der dritten Schicht eine vierte Schicht in Form einer Trägerschicht einer Dicke von mindestens 0,3 mm mit einer Vielzahl von Ausnehmungen, welche mehr als 0,5 % der Oberfläche betreffen, und eine fünfte Schicht in Form einer Deckschicht aus gas- und dampfundurchlässigem Material enthalten.

Bei der Trägerschicht kann es sich z.B. um eine Metall- oder Kunststoffschicht und bevorzugt um eine Metallschicht, wie beispielsweise um Bänder oder Bleche in einer minimalen Dicke von 0,3 mm, zweckmässig 0,4 mm, bevorzugt 0,5 mm und besonders bevorzugt 0,65 mm und einer maximalen Dicke von z.B. 5 mm, zweckmässig 3 mm und bevorzugt 2 mm, handeln. Die Bänder oder Bleche können beispielsweise aus Eisen, Stahl, Messing, Kupfer usw. bestehen und bevorzugt wird Aluminium oder eine Aluminiumlegierung eingesetzt. Die Oberflächen der Metalle können unbehandelt oder behandelt, wie z.B. galvanisiert oder lackiert, sein. Aluminiumhaltige Oberflächen können durch anodische Oxidation behandelt sein. Die Trägerschicht kann auch eine Kunststoffschicht, z.B. aus PVC, GFK oder, ABS, in einer Dicke von z.B. 0,5 bis 5 mm sein.

Die Ausnehmungen können beispielsweise die Öffnungen in einem Streckmetall darstellen oder können auf mechanischem, physikalischen oder chemischen Wege erzeugte Ausnehmungen oder Löcher, wie beispielsweise durch Stanzen, Bohren, durch Funkenerosion, durch Laserstrahl oder dergleichen oder durch Ätzen erzeugte Ausnehmungen oder Löcher z.B. in einer Platte, Blech oder Band sein. Die Fläche der Ausnehmungen, bezogen auf die gesamte Oberfläche einer Metallseite beträgt mehr als 0,5 %. Zweckmässig beträgt die Fläche der Ausnehmungen 0,5 bis 90 %, bevorzugt 1 bis 40 % und insbesondere 3 bis 10 % der Oberfläche.

Bevorzugt sind die Ausnehmungen auf der Oberfläche der Trägerschicht regelmässig, z.B. musterförmig oder rasterförmig, verteilt.

In der Praxis werden beispielsweise Ausnehmungen in Form von Bohrlöchern mit einem Durchmesser von 0,5 mm und grösser und zweckmässig 0,5 bis 2,5 mm angebracht. Der gegenseitige Abstand der Ausnehmungen kann von 1 bis 50 mm und zweckmässig von 5 bis 30 mm betragen.

Bei der ersten Schicht, der gas- und dampfundurchlässigen Deckschicht, kann es sich beispielsweise um eine kompakte Kunststoffschicht aus Kunststoffen der Reihe der Melaminharze, der Phenol-Formaldehydharze oder des Polyvinylchlorids oder um eine Metallschicht, z.B. in Folienform, handeln. In die Kunststoffschichten eingebettet können verstärkende Materialien, wie Fasern, Stapelfasern, Vliesse oder Gewebe aus Glas, Kohle, Kevlar, Aramid, Polyamid, Wolle, Baumwolle oder Whiskers aus keramischen Werkstoffen angewendet werden. Bevorzugte gas- und dampfundurchlässige Kunststoffschichten sind geschlossenzellige Schaumstoffschichten aus der Reihe der Polyvinylchloridschäume, der Polyurethanschäume, der Polyolefinschäume oder der Polycarbonatschäume. Die Dichte solcher Schäume kann beispielsweise von 500 bis 1000 kg/m³ betragen. Beispielsweise kann ein Polyvinylchloridschaum einer Dichte von 600 bis 800 kg/m³ bevorzugt angewendet werden. Die Dicke der ersten Schicht kann beispielsweise 0,5 bis 5 mm, zweckmässig 1 bis 3 mm und bevorzugt 1 bis 1,5 mm, betragen.

Die zweite Schicht, nämlich die Trägerschicht und die erste Schicht, nämlich eine gas- und dampfundurchlässige Deckschicht, sind mittels eines Klebstoffes miteinander verbunden. Solche Klebstoffe können beispielsweise aus der Reihe der lösungsmittelhaltigen, lösungsmittelfreien oder wasserbasierenden Ein- oder Zweikomponentenklebstoffe auf Polyurethanbasis ausgewählt werden. Es können auch Klebstoffe aus der Reihe der Styrol-Butadien-Klebstoffe, der Polyamid-Klebstoffe, der Ethyl-Vinyl-Acetat-Klebstoffe, der Polyester-Klebstoffe, der Klebstoffe aus PVC mit Weichmachern und Haftvermittlern, der Kautschuke oder Polyacrylate, des Polychloroprens, des Vinylacetates, des Vinylchlorids oder des Vinylidenchlorids und deren Copolymeren oder Reaktionsklebstoffe, enthaltend Epoxide und Säureanhydride, Epoxide und Polyamide, Polyisocyanate und Polyole oder Cyanoacrylate, ferner Methacrylate, Polyesterharze mit Styrol oder mit Acrylaten ausgewählt werden. Der Klebstoff kann als Folie, z.B. einer Dicke von 0,08 bis 1 mm, angewendet werden oder der Klebstoff kann flüssig, zähviskos oder pastös sein und durch Streichen, Rakeln, Rollen oder Sprühen in Mengen von z.B. 1 bis 100 g/m² aufgetragen werden.

Die dritte Schicht stellt eine Schicht aus einem gas- und dampfdurchlässigen zellenförmigen Material dar. Zweckmässig sind dies z.B. schaumförmige Kunststoffe geringer Dichte und dabei schaumförmige Kunststoffe, die aus offenzelligem oder teilweise offenzelligem Kunststoff bestehen oder schaumförmige Kunststoffe, deren Zellmembranen eine hohe Durchlässigkeit für Gase und Dämpfe aufweisen oder Materialien, die beispielsweise aus Schaumstoffgranulaten oder kompaktierten Schaumstoffgranulaten hergestellt werden. Die Kunststoffe können beispielsweise auf Basis von Styrol, PVC, Polyolefinen oder Polyurethanen sein. Die Dichte der schaumförmigen Kunststoffe kann z.B. 25 bis 200 kg/m³ und zweckmässig 25 bis 40 kg/m³ betragen. Andere Beispiele von zellenförmigen Materialien sind Schichten mit einer Wabenstruktur aus Kunststoffen, Metallen oder cellulosischen Materialien oder in weiterem Sinne Holzprodukte aus kunstharzverbundenem Holzmehl oder Holzspänen. Die Dicke der dritten Schicht kann z.B. von 0,5 bis 10 cm sein.

Die Trägerschicht und die dritte Schicht, eine gas- und dampfdurchlässige Schicht eines zellenförmigen Materials, können mit einem geeigneten Kleber, der beispielsweise aus obiger Aufzählung ausgewählt werden kann, miteinander verbunden werden oder die Verbindung der Schichten kann durch Heisspressen erfolgen, wobei z.B. das Kunststoffmaterial der dritten Schicht oberflächlich anschmilzt und sich mit der Trägerschicht verklebt. Es kann auch vorgesehen werden, dass ein Kunststoffmaterial der dritten Schicht oberflächlich durch beispielsweise ein Lösungsmittel angelöst und dann mit der Trägerschicht verklebt wird.

Die einzelnen Schichten der Verbundplatten sind in der Regel durchgehend, d.h. in ihrer ganzen Länge und Breite ohne Unterbrechung.

Beispiele von Verbundplatten, die von vorliegender Erfindung umfasst werden, weisen fünf Schichten auf, wobei die dritte Schicht einen Kern bildet und beidseitig des Kerns ist je eine Trägerschicht angeordnet, welche die zweite und eine vierte Schicht bilden. Der Kern stellt dann die Schicht des gas- und dampfdurchlässigen zellenförmigen Materials dar. Auf beiden Trägerschichten ist je eine Deckschicht aus gas- und dampfundurchlässigem Material angeordnet, welche die erste und eine fünf te Schicht bilden. Die erste und die fünfte Schicht können z.B. einen geschlossenzelligen PVC-Schaum, der in der Regel mittels eines Klebstoffes, wie z.B. eines Zweikomponenten-Polyurethan-Klebstoffes, festgelegt ist, darstellen. Der Kern besteht bevorzugt aus einem Formkörper aus gegenseitig verklebten, zelligen Körnern aus geblähtem Polystyrol, wobei die zelligen Körner durch einen gehärteten Klebstoff miteinander verbunden sind. Der Kern kann auch Fasern, Stapelfasern oder andere Verstärkungsmaterialien und fallweise flammhemmende Zusätze enthalten. Der Kern ist in der Regel mit einem der vorgenannten Klebstoffe mit den Trägerschichten verbunden.

Typische Dicken solcher Verbundplatte liegen im Bereich von 1,0 bis 10,0 cm, wobei der Kern eine Dicke von zweckmässig 0,6 bis 9,6 cm aufweist , die Metallschichten zweckmässig 0,3 bis 1,5 mm dick sind und die gas- und dampfundurchlässigen Kunststoffschichten zweckmässig 1,0 bis 1,5 mm dick sind.

Die erfindungsgemässen Verbundplatten sind bezüglich ihrer Länge und Breite unkritisch und diese richten sich nach den Einsatzgegebenheiten. Das Verfahren, welches für die Herstellung der erfindungsgemässen Verbundplatten bevorzugt wird, kann beispielsweise derart ausgeführt werden, dass in einer Presse die einzelnen Schichten aufeinander gelegt werden, wobei der Klebstoff beispielsweise in Folienform eingelegt oder zwischen die einzelnen Schichten besprüht, gestrichen oder gerakelt werden kann. Anschliessend wird ein Druck von beispielsweise 1 bis 15 bar angelegt und gegebenenfalls gleichzeitig auf eine Temperatur von 30 bis 100 °C beheizt. Innerhalb von 1 bis 60 Minuten verbinden sich die einzelnen Schichten trennfest miteinander.

Eine derartige Verbundplatte ist formsteif, wobei sich die Steifigkeit nach der Dicke der einzelnen Materialien richtet. Eine solche Verbundplatte kann mit den üblichen Mitteln auf das benötigte Mass, beispielsweise durch Sägen oder Fräsen, gebracht werden. Entsprechend der weiteren Verwendung können die Platten zu weiten Radien gebogen oder durch Schwächung wenigstens einer Schicht, z.B. durch Einfräsen von Nuten und Umbiegen, zu Eckstücken geknickt werden.

Verbundplatten nach vorliegender Erfindung lassen sich beispielsweise im Hochbau als Fassadenplatten für aussen oder innen, als Verkleidungstafeln für Aussenverkleidungen oder zum Innenausbau, als Trennwände, als Stellwände und als Boden- und Deckenplatten verwenden. Weitere Verwendungsmöglichkeiten sind beispielsweise die Verwendung als Zeigetafeln, als Werbeträger, wie sog. Displays, Plakatträger, oder als Stellflächen. Besonders bevorzugt ist die Verwendung der Verbundplatten nach vorliegender Erfindung für Wände oder Trennwände oder auch Decken und Böden in der Reinraumtechnik. Unter Reinräumen werden Rein- oder Sterilräume verstanden, wie sie heute für Arbeitsstätten in der Medizin, der Pharmazie und auch der Elektronik in zunehmendem Masse erstellt werden müssen.

Die erfindungsgemässen Verbundplatten weisen je nach Anwendung eine oder zwei Sichtflächen auf. Eine oder beide Sichtflächen werden vorteilhaft durch jeweils die gas- und dampfundurchlässige Kunststoffschicht gebildet. Derart ausgestaltete Sichtflächen können schadlos auch mit aggressiven Reinigungsmitteln behandelt werden, lokale Erwärmungen oder Strahleneinfluss, z.B. durch UV-Bestrahlung, bleiben ohne delaminierende Wirkung auf die Verbundplatten, da allfällige sich bildende Gase oder Dämpfe, aus sowohl Kunststoffen als auch Klebstoffen herrührend, durch die Ausnehmungen in der Metallschicht und über die gas- und dampfdurchlässige Schicht in Form des zellenförmigen Materials entweichen können.

## Patentansprüche

1. Formsteife Verbundplatte enthaltend wenigstens drei unmittelbar aufeinanderfolgende durch Klebverbindung miteinander verbundene Schichten, wobei die erste Schicht eine Deckschicht, die zweite Schicht eine Trägerschicht und die dritte Schicht eine gas- und dampfdurchlässige Schicht eines zellenförmigen Materials darstellt,
dadurch gekennzeichnet, dass
die Deckschicht aus gas- und dampfundurchlässigem Material besteht, dass die Trägerschicht eine Dicke von mindestens 0,3 mm hat und eine Vielzahl von Ausnehmungen aufweist, welche mehr als 0,5 % der Oberfläche betreffen, dass die gas- und dampfdurchlässige dritte Schicht aus einem Formkörper aus gegenseitig verklebten, zelligen Körnern aus geblähtem Polystyrol ist, wobei die zelligen Körner durch einen gehärteten Klebstoff miteinander verbunden sind.

2. Verbundplatte nach Anspruch 1, dadurch gekennzeichnet, dass die Ausnehmungen auf der Oberfläche regelmässig verteilt sind.

3. Verbundplatte nach Anspruch 1, dadurch gekennzeichnet, dass auf der dritten Schicht eine vierte Schicht in Form einer Trägerschicht einer Dicke von mindestens 0,3 mm mit einer Vielzahl von Ausnehmungen, welche mehr als 0,5 % der Oberfläche betreffen, und auf der vierten Schicht eine fünfte Schicht in Form einer Deckschicht aus gas- und dampfundurchlässigem Material enthalten ist.

4. Verbundplatte nach Anspruch 1, dadurch gekennzeichnet, dass die gas- und dampfundurchlässigen Deckschichten kompakte Kunststoffschichten aus Kunststoffen der Reihe der Melaminharze, der Phenol-Formaldehydharze oder des Polyvinylchlorids oder geschlossenzellige Schaumstoffschichten der Reihe der Polyvinylchloridschäume, der Polyurethanschäume, der Polyolefinschäume oder der Polycarbonatschäume darstellen.

5. Verbundplatte nach Anspruch 1, dadurch gekennzeichnet, dass die Verbundplatte fünf Schichten aufweist, wobei die dritte Schicht einen Kern aus gas- und dampfdurchlässigem zellenförmigen Material bildet und beidseitig des Kerns je eine Trägerschicht aus Metall aufweist, welche die zweite und eine vierte Schicht bilden und auf beiden Trägerschichten je eine Deckschicht eines gas- und dampfundurchlässigen Materials angeordnet ist, welche die erste und eine fünfte Schicht bilden.

6. Fassadenplatten im Hochbau für aussen oder innen, Verkleidungstafeln für Aussenverkleidungen oder zum Innenausbau, Raumauskleidungen, Trennwände, Stellwände, Bodenplatten, Deckenplatten, Zeigetafeln, Werbeträger, Displays, Plakatträger und Stellflächen mit Verbundplatten nach Anspruch 1.

7. Reinräume mit Verbundplatten nach Anspruch 1.

## Claims

1. Rigid composite panel containing at least three immediately successive layers joined together by a bonded joint, the first layer being an outer layer, the second layer being a supporting layer and the third layer being a gas-permeable and vapour-permeable layer of a cellular material, characterised in that the outer layer consists of gas-impermeable and vapour-impermeable material, that the supporting layer has a thickness of at least 0.3 mm and comprises a plurality of recesses covering more than 0.5 % of the surface, and that the gas-permeable and vapourpermeable third layer consists of a moulded part of mutually bonded cellular particles of expanded polystyrene, the cellular particles being joined together by a cured adhesive.

2. Composite panel according to claim 1, characterised in that the recesses are distributed regularly over the surface.

3. Composite panel according to claim 1, characterised in that the third layer is provided with a fourth layer in the form of a supporting layer having a thickness of at least 0.3 mm with a plurality of recesses covering more than 0.5 % of the surface and the fourth layer is provided with a fifth layer in the form of an outer layer of gas-impermeable and vapour-impermeable material.

4. Composite panel according to claim 1, characterised in that the gas-impermeable and vapour-impermeable outer layers are compact plastic layers of plastics of the series consisting of melamine resins, phenol-formaldehyde resins or polyvinyl chloride or closed-cell foam layers of the series consisting of polyvinyl chloride foams, polyurethane foams, polyolefin foams or polycarbonate foams.

5. Composite panel according to claim 1, characterised in that the composite panel comprises five layers, the third layer forming a core of gas-permeable and vapour-permeable cellular material and comprising a supporting layer of metal on either side of the core, forming the second and a fourth layer, and an outer layer of a gas-impermeable and vapour-impermeable material being arranged on each of the supporting layers, forming the first and a fifth layer.

6. Facade panels in building construction for external or internal purposes, cladding panels for external claddings or for internal finishing, interior linings, partition walls, movable partitions, floor panels, ceiling panels, display panels, billboards, displays, poster panels and display surfaces with composite panels according to claim 1.

7. Clean rooms with composite panels according to claim 1.

## Revendications

1. Panneau composite indéformable comprenant au moins trois couches directement superposées fixées ensemble par collage, la première couche étant une couche de couverture, la deuxième couche une couche de support et la troisième couche une couche, perméable aux gaz et aux vapeurs,d'un matériau cellulaire, caractérisé en ce que la couche de couverture est constituée d'un matériau imperméable aux gaz et aux vapeurs, en ce que la couche de support a une épaisseur d'au moins 0,3 mm et présente un grand nombre de renfoncements, lesquels concernent plus de 0,5% de la surface, an ce que la troisième couche perméable aux gaz et aux vapeurs est formée d'un corps moulé de grains cellulaires an polystyrène expansé collés les uns aux autres, les grains cellulaires étant reliés ensemble par un adhésif durci.

2. Panneau composite suivant la revendication 1, caractérisé an ce que les renfoncements sont répartis régulièrement à la surface.

3. Panneau composite suivant la revendication 1, caractérisé en ce qu'il comprend sur la troisième couche une quatrième couche, sous la forme d'une couche de support d'une épaisseur d'au moins 0,3 mm, comportant un grand nombre de renfoncements, lesquels concernent plus de 0,5% de la surface, et, sur la quatrième couche, une cinquième couche sous la forme d'une couche de couverture en matériau imperméable aux gaz et aux vapeurs.

4. Panneau composite suivant la revendication 1, caractérisé en ce que les couches de couverture imperméables aux gaz et aux vapeurs sont des couches compactes an matière plastique fabriquées à partir de matières plastiques de la série des résines mélaminées, des résines formophénoliques ou de poly(chlorure de vinyle) ou des couches de matériau expansé à cellules fermées de la série des mousses de poly(chlorure de vinyle), des mousses de polyuréthanne, des mousses de polyoléfine ou des mousses de polycarbonate.

5. Panneau composite suivant la revendication 1, caractérisé en ce que le panneau composite comporte cinq couches, la troisième couche formant un noyau d'un matériau cellulaire perméable aux gaz et aux vapeurs et présentant de chaque côté du noyau une couche de support métallique, constituant la deuxième et une quatrième couche, et sur chacune des deux couches de support une couche de couverture d'un matériau imperméable aux gaz et aux vapeurs, lesquelles forment la première et la cinquième couches.

6. Plaques de façade comme plaques de façades à l'extérieur ou à l'intérieur dans la construction de bâtiments, plaques de revêtement pour revêtements extérieurs ou pour l'aménagement intérieur, revêtements internes, cloisons de séparation, parois amovibles, plaques de sol, plaques de plafond, panneaux indicateurs, supports publicitaires, présentoirs, supports d'affiches et surfaces d'exposition présentant des panneaux composites suivant la revendication 1.

7. Salles blanches avec panneaux composites suivant la revendication 1.
